Europäisches Patentamt

European Patent Office

Office européen des brevets

(19)

(11) Veröffentlichungsnummer : **0 420 817 B1**

## (12) EUROPÄISCHE PATENTSCHRIFT

(45) Veröffentlichungstag der Patentschrift :
**08.12.93 Patentblatt 93/49**

(51) Int. Cl.$^5$ : **G03B 27/73**

(21) Anmeldenummer : **90810728.7**

(22) Anmeldetag : **20.09.90**

(54) Fotografisches Farbkopiergerät und Belichtungssteuerungsverfahren.

(30) Priorität : **29.09.89 CH 3556/89**

(43) Veröffentlichungstag der Anmeldung :
**03.04.91 Patentblatt 91/14**

(45) Bekanntmachung des Hinweises auf die
Patenterteilung :
**08.12.93 Patentblatt 93/49**

(84) Benannte Vertragsstaaten :
**CH DE FR GB IT LI**

(56) Entgegenhaltungen :
**EP-A- 0 128 348
DE-A- 3 435 801
DE-A- 3 641 635
DE-A- 3 712 730
FR-A- 2 211 132**

(56) Entgegenhaltungen :
**US-A- 3 085 468
PATENT ABSTRACTS OF JAPAN, Band 9, Nr.
199 (P-380)[1922], 16. August 1985; & JP-A-60
63 430**

(73) Patentinhaber : **GRETAG IMAGING AG
Althardstrasse 70
CH-8105 Regensdorf (CH)**

(72) Erfinder : **Kraft, Walter, Dr.
Appenzellerstrasse 57
CH-8049 Zürich (CH)**
Erfinder : **Nehring, Jürgen, Dr.
Neustrasse 47
CH-5430 Wettingen (CH)**

(74) Vertreter : **Kleewein, Walter, Dr. et al
Patentabteilung CIBA-GEIGY AG Postfach
CH-4002 Basel (CH)**

## Beschreibung

Die Erfindung betrifft ein fotografisches Farbkopiergerät gemäss Oberbegriff des Patentanspruchs 1 sowie ein Verfahren zur Steuerung der Belichtung in einem fotografischen Farbkopiergerät gemäss Oberbegriff des Patentanspruchs 24.

Zur Ermittlung der optimalen Belichtungszeiten bzw. Kopierlichtmengen in einem fotografischen Farbkopiergerät werden die Farbdurchlässigkeiten oder Farbdichten einer Kopiervorlage in den drei Grundfarben bestimmt. Dabei ist es nötig, die spektrale Empfindlichkeit der Messanordnung möglichst genau an die spektrale Empfindlichkeit des verwendeten Kopiermaterials anzugleichen. Diese Forderung ergibt sich aus der Erfahrung, dass bei Abweichungen der spektralen Empfindlichkeiten der Messanordnung und des Kopiermaterials ein Anstieg in der Dichte in einer Farbe der Kopiervorlage nicht zu einer entsprechenden Aenderung in der Kopierlichtmenge führt und so eine Farbverfälschung eintreten kann, und ist z.B. auch in der Publikation von R.W.G. Hunt, "The Reproduction of Colour", S. 284 angesprochen.

Aus der US-A-4,589,766 ist ein fotografisches Farbkopiergerät bekannt, bei dem dieser Forderung mit Hilfe spezieller optischer Messfilter zu genügen versucht wird. Der Nachteil dieser Methode zeigt sich spätestens dann, wenn mit unterschiedlichem Kopiermaterial, beispielsweise von verschiedenen Herstellern stammend, gearbeitet wird. Bei jedem Wechsel des Kopiermaterials müssen neue, an die geänderten spektralen Empfindlichkeiten des Kopiermaterials angepasste Messfilter eingesetzt werden, was den Aufwand beträchtlich erhöht und zusätzliche Rüstzeiten erfordert. Ueberdies sind derartige Messfilter wegen der erforderlichen extremen Präzision nur sehr schwer herstellbar und entsprechend teuer. Ein weiterer zusätzlicher Aufwand entsteht durch das logistische Management der verschiedenen an die spektralen Empfindlichkeiten des Kopiermaterials angepassten Messfilter. Ausserdem ist man durch die Wahl eines bestimmten Satzes von Messfiltern meist auch an eine bestimmte Sorte eines bestimmten Herstellers von Kopiermaterial gebunden. Zusätzlich stellen starke Schwankungen der Eigenschaften der Kopiervorlagen bedingt durch unterschiedliche Fabrikate, ungeeignete Beleuchtung, Unter- und Ueberbelichtung usw. hohe Anforderungen an das fotografische Farbkopiergerät und das Belichtungssteuerungsverfahren, um dennoch eine für den Amateurfotografen akzeptable Bildqualität zu erreichen.

Durch die Erfindung, wie sie in Patentanspruch 1 (Vorrichtung) bzw. 24 (Verfahren) definiert ist, werden diese Nachteile behoben und die Aufgabe gelöst, die für die richtige Belichtungssteuerung massgeblichen Farbauszugswerte an das jeweilige verwendete Kopiermaterial angepasst zu ermitteln, ohne dabei die optischen Messfilter wechseln zu müssen. Das erfindungsgemässe Farbkopiergerät und Belichtungssteuerungsverfahren ermöglichen eine akzeptable Bildqualität auch unter den vorstehend erwähnten ungünstigen Voraussetzungen. Ueberdies ist die erfindungsgemässe Lösung konstruktiv relativ einfach und kostengünstig.

Bevorzugte Varianten, Weiterbildungen und vorteilhafte Ausbildungsformen sind Gegenstand der abhängigen Patentansprüche.

Im folgenden wird die Erfindung in verschiedenen Ausführungsbeispielen anhand der Zeichnungen näher erläutert. Es zeigen:

Fig. 1       eine Prinzipskizze des erfindungsgemässen fotografischen Farbkopiergerätes,

Fig. 2       ein Ausführungsbeispiel einer in Fig. 1 gesamthaft mit 4 bezeichnete Messanordnung,

Fig. 3       ein Abtastmuster einer Kopiervorlage,

Fig. 4-7       schematische Darstellungen von vier Varianten von elektrooptischen Filtern,

Fig. 8       ein weiteres Ausführungsbeispiel eines elektrooptischen Filters,

Fig. 9       eine Prinzipdarstellung eines Solc-Filters,

Fig. 10       eine Prinzipdarstellung eines einstufigen Lyot-Ohman Filters und

Fig. 11-13       Diagramme zur Erläuterung des erfindungsgemässen Verfahrens

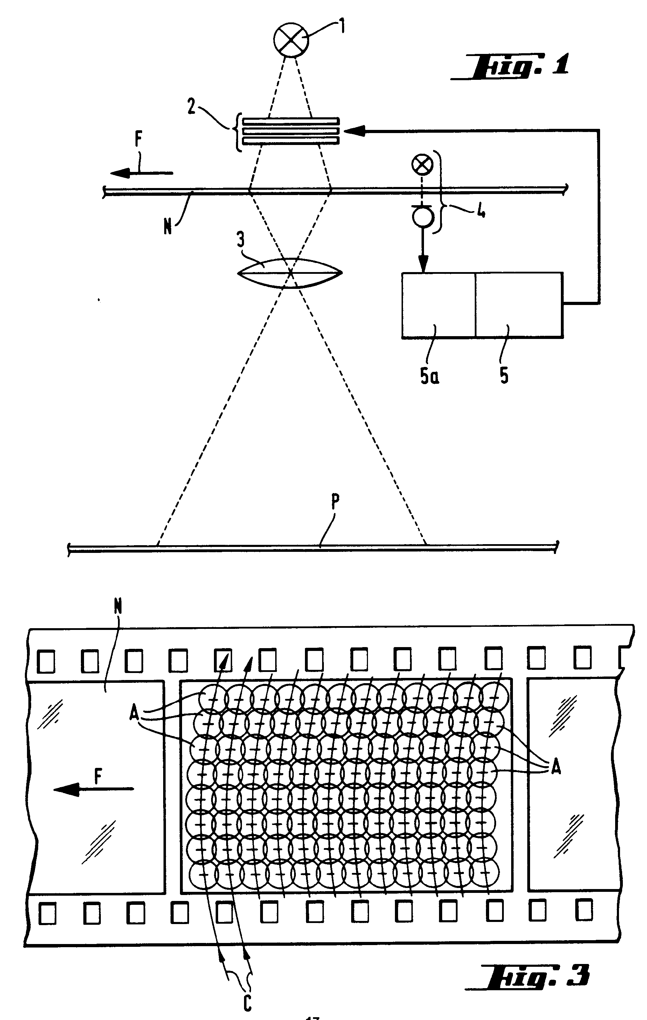

Das in Fig. 1 dargestellte fotografische Farbkopiergerät umfasst im wesentlichen zwei Stationen, welche von einer vorzugsweise streifenförmigen Kopiervorlage N hintereinander durchlaufen werden. Die Transportrichtung ist durch den Pfeil F angedeutet. In der ersten Station erfolgt die Abtastung der Kopiervorlage N, und in der zweiten Station wird die Kopiervorlage N auf lichtempfindliches Kopiermaterial P abgebildet.

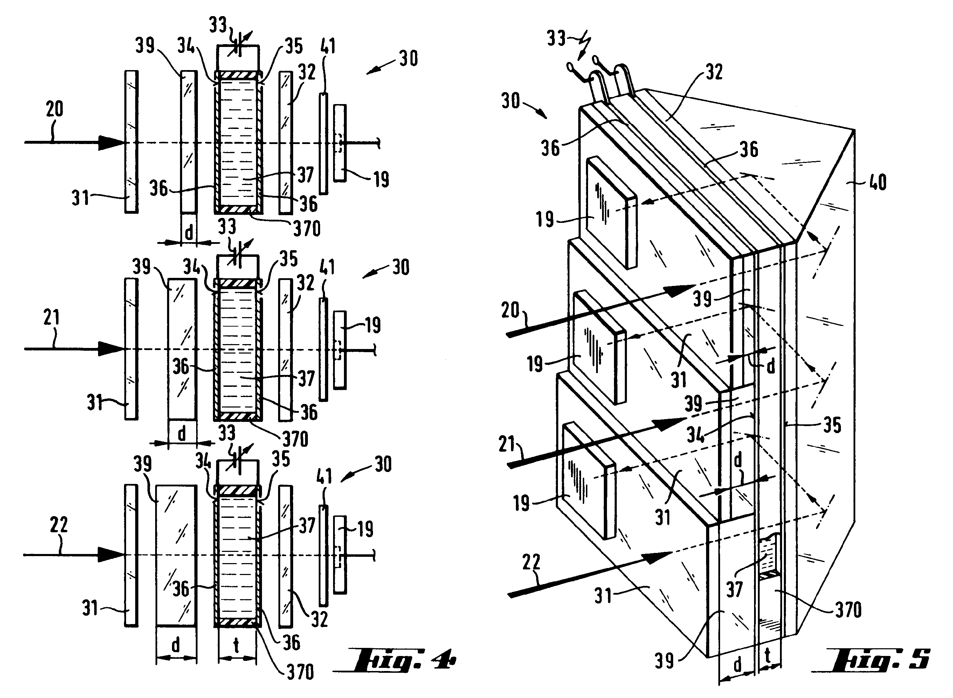

Mit Ausnahme der noch zu erklärenden Unterschiede in der Messanordnung der ersten Station ist das fotografische Farbkopiergerät aufgebaut wie herkömmliche Geräte dieser Art, beispielsweise etwa die aus den US-PS Nr. US-A-4,092,067, US-A-4,101,216 und US-A-4,279,505 bekannten. In Fig. 1 sind daher auch nur die wesentlichen, für das Verständnis der Erfindung notwendigen Komponenten eines solchen Farbkopiergerätes dargestellt. Es umfasst eine Kopierlichtquelle 1, einen Satz servogesteuerter Farbfilter 2 oder ähnliches, eine Abbildungsoptik 3, eine eine Messlichtquelle und fotoelektrische Detektoren beinhaltende Messanordnung 4 und eine Rechen- und Steuereinheit 5, 5a für die Belichtungssteuerung. Fotografische Farbkopiergeräte dieses prinzipiellen Aufbaus sind beispielsweise die weltweit eingesetzten Hochleistungsprinter Modelle 3139, 3140, 3141 oder 3142 der Anmelderin. Die Ausmessung der Kopiervorlage N erfolgt bei den genannten Hochleistungsprintern bereichsweise, beispielsweise mit einer Auflösung von rund 100 Abtastbereichen (Punkten) A je Vorlage und mehr (Fig. 3). Jeder Abtastbereich A wird in die drei Grundfarben Rot R, Grün G und Blau B zerlegt und ein Messwert tripel, die drei sogenannten Farbauszugswerte für die Grundfarben bestimmt. Diese etwa 300 Farbauszugswerte werden dann auf an sich bekannte Weise nach verschiedenen Kriterien zur Bestimmung der erforderlichen Kopierlichtmengen ausgewertet und danach die Belichtung des lichtempfindlichen Kopiermaterials P gesteuert. Die fotoelektrische Analyse der Kopiervorlage könnte aber auch durch zeilenweises oder flächiges Abtasten erfolgen, wobei entsprechend vorzugsweise zeilenförmig oder flächenförmig angeordnete oder ausgebildete fotoelektrische Detektoren zum Eisatz kommen.

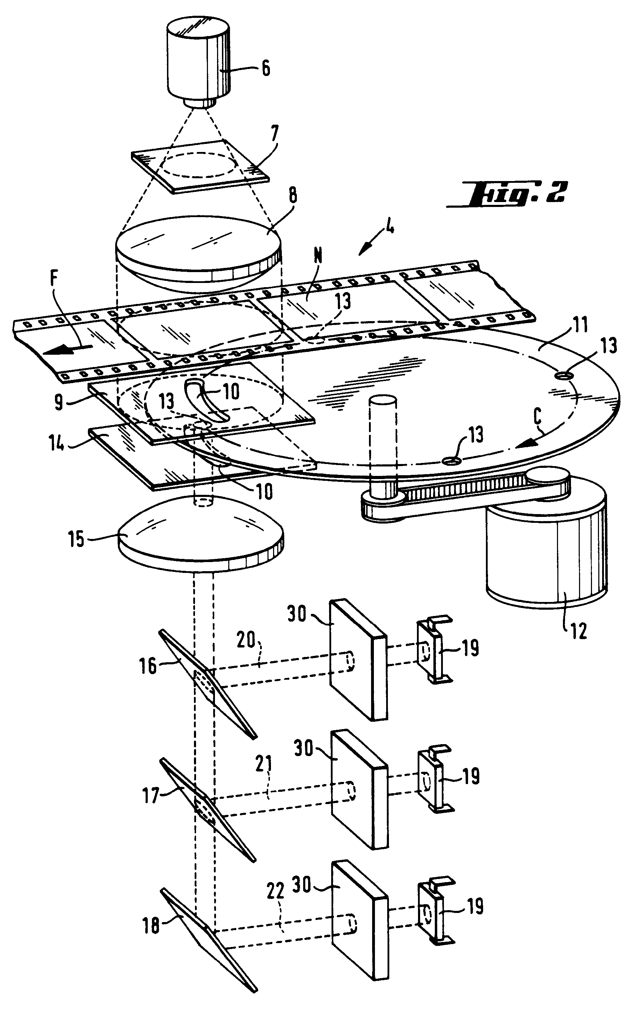

In Fig. 2 ist die gesamthaft mit 4 bezeichnete erfindungsgemässe Messanordnung dargestellt. Die Kopiervorlage N befindet sich im Strahlengang einer Messlichtquelle 6. Unmittelbar nach der Messlichtquelle 6 ist ein Wärmeschutz-Filter 7 angeordnet. Das Messlicht gelangt durch eine erste Kondensorlinse 8 auf die Kopiervorlage N. Unterhalb der Kopiervorlage N ist die eigentliche Abtastvorrichtung angeordnet. Diese umfasst eine Abtastscheibe 11 mit Oeffnungen 13, die zwischen zwei zueinander parallelen Schlitzblenden 9 und 14 in Richtung des Pfeiles C rotierbar angeordnet ist. Als Antrieb für die Abtastscheibe 11 dient ein Motor 12. Die Schlitzblenden 9 und 14 weisen jeweils einen kreisbogenförmigen Schlitz 10 auf.

Ueblicherweise sind die Schlitze 10 deckungsgleich übereinander angeordnet. Ihre gegenseitige Lage kann aber derart verändert werden, dass die effektive Schlitzlänge an das jeweilige Format der Kopiervorlage N (z.B. 135er Film oder 110er Film) angepasst ist. Die Breite der Schlitze 10 und ihre Krümmung ist auf die Oeffnungsdurchmesser und den Abstand der Oeffnungen 13 von der Rotationsachse der Abtastscheibe 11 abgestimmt. Im vorliegenden Ausführungsbeispiel weist die Abtastscheibe 11 vier Oeffnungen 13 auf, die in Richtung des Pfeiles C rotierend entlang der effektiven Schlitzlänge kurzfristig das Messlicht passieren lassen. Dadurch wird die Kopiervorlage N in einzelne punktförmige Abtastbereiche A zerlegt. In Fig. 3 ist ein resultierendes typisches Abtastmuster einer Kopiervorlage dargestellt. Die Abtastbereiche A sind zeilenförmig aneinandergereiht. Jede Zeile verläuft etwa senkrecht zur Transportrichtung F. Der gegenüber der Transportrichtung F leicht zurückgeneigte Verlauf der Zeilen ist eine Folge der Ueberlagerung des Transportes in Richtung F der Kopiervorlage N und der Rotation C der Oeffnungen 13 der Abtastscheibe. Nach dem Durchtritt durch die Abtastvorrichtung gelangt das Messlicht durch eine zweite Kondensorlinse 15 auf einen teildurchlässigen Blauspiegel 16, der vorzugsweise unter etwa 45° zum Strahlengang geneigt angeordnet ist. Der blaue Anteil des Messlichtes wird von dem Blauspiegel 16 abgelenkt, für den übrigen Anteil des Messlichtes stellt er bloss eine durchlässige Glasplatte dar. Der übrige Anteil des Messlichtes gelangt schliesslich zu einem teildurchlässigen Grünspiegel 17, welcher den Grünanteil des Messlichtes ablenkt und nur den Rot-Anteil ungehindert passieren lässt. Vorzugsweise sind der Blau- und der Grünspiegel dichroitische Spiegel. Auf diese Weise wird das Messlicht in die drei Grundfarben Blau B, Grün G und Rot R aufgespalten. Vorzugsweise werden die drei Grundfarbenanteile des Messlichtes etwa in dieselbe Richtung abgelenkt. Idealerweise verlaufen die Strahlengänge 20, 21, 22 der Grundfarben B, G, R von den Ablenkmitteln 16, 17, 18 weg etwa parallel zueinander.

Die Messanordnung 4 umfasst in den Strahlengängen 20, 21, 22 der Grundfarben angeordnete spezielle Messfilter 30, deren spektrales Transmissions- oder Absorptionsverhalten vorzugsweise individuell nach Massgabe der spektralen Empfindlichkeiten des Kopiermaterials P und/oder spektralen Absorptionen der Kopiervorlage N steuerbar ist. Nach dem Durchlaufen der Messfilter 30 trifft das Messlicht jeder Grundfarbe auf fotoelektrische Detektoren 19 die im Anschluss an die Messfilter in den Strahlengängen angeordnet sind.

Die steuerbaren Messfilter 30 umfassen gemäss den in den Fig. 4 bis 8 dargestellten Ausführungsbeispielen Polarisationsfilter, insbesondere Eingangspolarisatoren 31 und Ausgangspolarisatoren 32, und doppelbrechende Kristalle 37 bzw. 38. Die Eingangspolarisatoren 31 sind vor den doppelbrechenden Kristallen 37 bzw. 38 im Strahlengang 20, 21, 22 der Grundfarben B, G, R angeordnet. Die Ausgangspolarisatoren 32 befinden sich vor den fotoelektrischen Detektoren 19. Die Steuerung des spektralen Transmissions- oder Absorptionsverhaltens der Messfilter 30 erfolgt durch Beeinflussung der effektiven Doppelbrechung der doppelbrechenden Kristalle 37 bzw. 38 mit regelbaren elektrischen oder magnetischen Feldern. Dementsprechend unterscheidet man auch zwischen elektrooptischen und magnetooptischen Kristallen. Vorzugsweise kommen, wie in den Fig. 4 bis 8 dargestellt, sogenannte elektrooptische Filter mit elektrooptischen Kristallen zum Einsatz.

Die elektrooptischen Kristalle können Flüssigkristalle 37 (Fig. 4-7) oder elektrooptische Festkörperkristalle 38 (Fig. 8) sein. Während zur Beeinflussung der effektiven Doppelbrechung von elektrooptischen Festkörperkristallen 38, die üblicherweise vom Typ der Adenosindihydrogenphosphate ADP oder der Kaliumdihydrogenphosphate KDP sind, grosse Feldstärken nötig sind, die Steuerungsspannungen in der Grössenordnung von Kilovolt verlangen, kommt man bei der Verwendung von Flüssigkristallen 37 hingegen bereits mit einigen wenigen Volt aus Vorzugsweise werden daher Flüssigkristalle 37 verwendet, vorzugsweise solche des nematischen Typs. Die Flüssigkristalle 37 befinden sich innerhalb etwa quaderförmiger zellen 370, die zumindest an ihren etwa planparallelen Lichteintritts- und Lichtaustrittsflächen 34 und 35 transparent ausgebildet sind. Die inneren Oberflächen der Flüssigkristallzellen 370 sind derart behandelt, dass die Flüssigkristalle 37 verdrillt oder vorzugsweise einheitlich parallel zueinander orientiert vorliegen. Je nachdem, ob die dielektrische Anisotropie der Flüssigkristallzellen positiv oder negativ gewählt wird, lässt sich durch Anlegen eines elektrischen Feldes an die Zellen die effektive Doppelbrechung erniedrigen oder erhöhen. Die Flüssigekristallzellen 370 werden derart in den Strahlengängen 20, 21, 22 der Grundfarben B, G, R ausgerichtet, dass ihre Lichteintritts- und Lichtaustrittsflächen 34 und 35 im wesentlichen senkrecht dazu stehen.

Die Beeinflussung der effektiven Doppelbrechung der in den Fig. 4 bis 7 dargestellten doppelbrechenden Flüssigkristalle 37 erfolgt in longitudinaler Richtung, indem das elektrische Feld parallel zu den Strahlengängen 20, 21, 22 angelegt wird. Dazu sind an den Lichteintritts- bzw. den Lichtaustrittsflächen 34 und 35 transparente Elektroden 36 angebracht, die an eine oder mehrere Spannungsquellen 33 anschliessbar sind. Die Elektroden 36 sind vorzugsweise aus Indium-Zinn-Oxyd oder einer ähnlichen Verbindung.

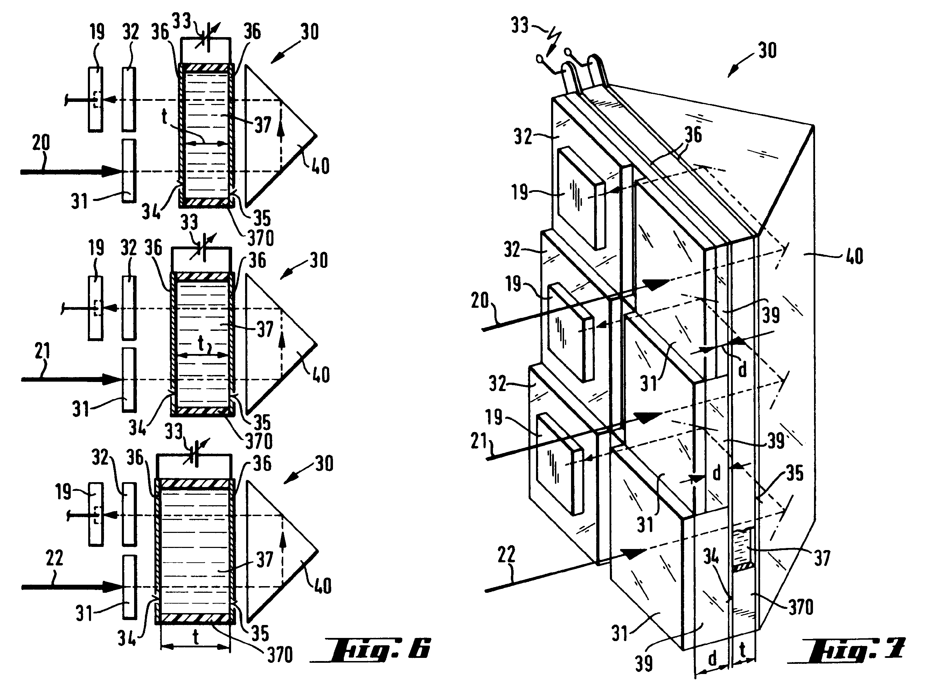

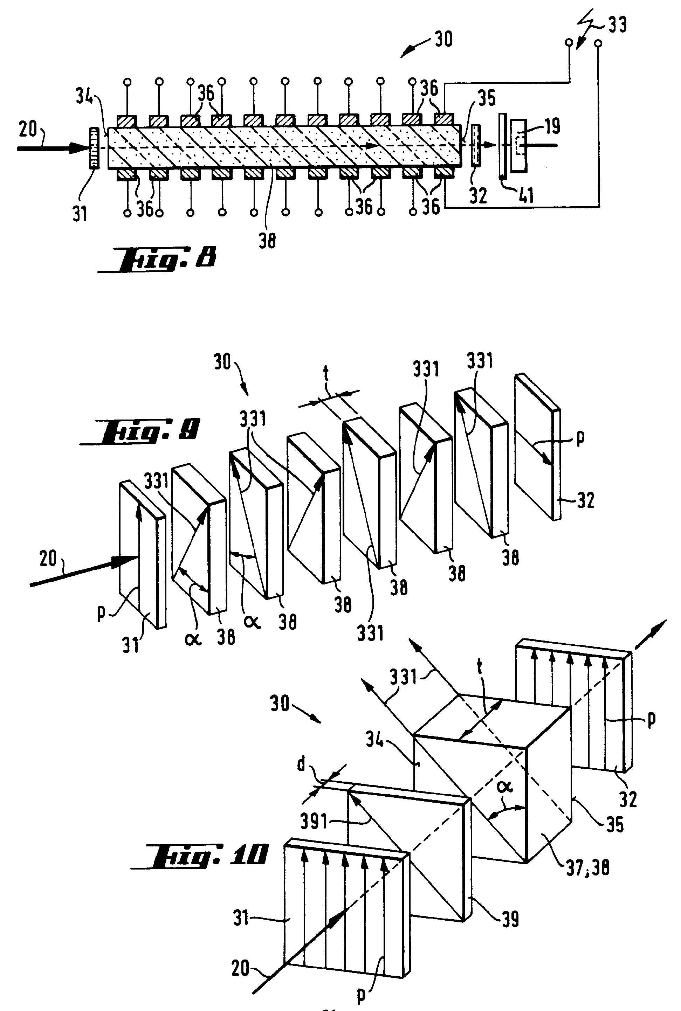

Die Flüssigkristallzellen 370 für die einzelnen Grundfarben B, G, R sind üblicherweise, wie in den Fig. 4, 5 und 7 dargestellt, von gleicher Dicke t (Fig. 5, 7), sie können aber auch, so wie in Fig. 6 angedeutet unterschiedlich dick sein. Durch die Wahl unterschiedlicher Dicken t der Flüssigkristallzellen 370 (Fig. 6) kann der Transmissionsverlauf jedes der Filter für die Grundfarben Blau B, Grün G und Rot R einzeln der entsprechenden spektralen Empfindlichkeit des Kopiermaterials P angepasst werden. Falls die spektralen Messempfindlichkeiten für die drei Grundfarben etwa gleiche relative Bandbreiten aufweisen sollen, wird man die Kristalldicken t näherungsweise im Verhältnis $\lambda_B : \lambda_G : \lambda_R$ wählen, wobei $\lambda_B$, $\lambda_G$, $\lambda_R$ die Mittenwellenlängen der spektralen Messempfindlichkeiten in den drei Grundfarben Blau, Grün und Rot darstellen. Für die üblichen Kopiermaterialien P beträgt dieses Verhältnis z.B. etwa 0,7:0,8:1.

Bei der Verwendung von Flüssigkristallzellen 370 gleicher Dicke t kann dasselbe Ziel, nämlich eine individuelle Anpassung der Messempfindlichkeiten in den drei Grundfarben an das Kopiermaterial, auch dadurch erreicht werden, dass zwischen den Eingangspolarisatoren 31 und den Lichteintrittsflächen 34 (oder zwischen den Lichtaustrittsflächen 35 und den Ausgangspolarisatoren 32) doppelbrechenden Festkörperkristallplättchen 39 unterschiedlicher Dicke d angeordnet werden, wie in den Fig. 4, 5 und 7 angedeutet.

Vorzugsweise sind die Festkörperkristallplättchen 39 aus Quarz, Saphir oder ähnlichen doppelbrechenden Materialien. Die Festkörperkristallplättchen 39 werden derart vor den Lichteintrittsflächen 34 angeordnet, dass ihre optischen Achsen 391 vorzugsweise parallel oder senkrecht zu den entsprechenden Achsen 331 der Flüssigkistalle 37 stehen. (Fig.10)

Anstatt der einzelnen Flüssigkristallzellen 370 gleicher Dicke t in den Strahlengängen 20, 21, 22 der Grundfarben B, G, R kann auch, so wie in den Fig. 5 und 7 dargestellt, eine einzige länglich ausgebildete Flüssigkristallzelle 370 konstanter Dicke t so angeordnet werden, dass sie die Strahlengänge 20, 21, 22 kreuzt. Diese Massnahme zusammen mit den Festkörperkristallplättchen 39 unterschiedlicher Dicke d erlaubt die Verwendung von handelsüblichen Flüssigkristallezellen 370, beispielsweise des Typs FSS-1153 der Firma OPTREX.

Die elektrooptischen Filter 30 können auf zwei verschiedene Arten aufgebaut sein, nach Art eines Lyot-Ohman Filters oder nach der Art eines Solc-Filters. Diese beiden elektrooptischen Filtertypen und insbesondere ihre Wirkungsweise sind beispielsweise in der Publikation von W.J. Gunning in Optical Engineering, November/December 1981, Vol. 20 No. 6, Seiten 837-845 oder in einer Publikation von H.A. Tarry in Electronics Letters, 18th September 1975, Vol. 11, No. 19, Seiten 471-472 beschrieben (nur Solc-Filter). Die Ausführungen über derartige elektrooptische Filter beschränken sich im folgenden daher nur auf den Gesamtaufbau und die grobe Wirkungsweise.

In den Fig. 4 und 5 sind zwei Varianten von Lyot-Ohman Filtern dargestellt. Fig. 4 zeigt drei separate sogenannte einstufige Lyot-Ohman Filter, Fig. 5 ein zweistufiges Lyot-Ohman Filter mit einer einzigen länglich ausgebildeten Flüssigkristallzelle 370 mit einheitlich paralleler Orientierungsstruktur der Flüssigkristalle 37. Bei beiden Varianten sind die Flüssigkristallzellen 370 zwischen dem Eingangs- und dem Ausgangspolarisator 31 und 32 angeordnet. Die Durchlassrichtungen p der beiden Polarisatoren 31 und 32 sind parallel zueinander ausgerichtet (Fig. 10). Die Flüssigkristallzellen 370 sind derart in den Strahlengängen 20, 21, 22 der Grundfarben B, G, R angeordnet, dass die durch die optischen Achsen 331 der Flüssigkristalle 37 und den jeweiligen Strahlengängen 20, 21, 22 definierten Ebenen mit den Durchlassrichtungen p der Eingangspolarisatoren 31 einen Winkel $\alpha$ von etwa $\pm20°$ bis $\pm50°$, vorzugsweise etwa $45°$ bilden.

Die in Fig. 5 dargestellte Variante des zweistufigen Lyot-Ohman Filters weist ein im Anschluss an den Ausgangspolarisator 32 angeordnetes Umlenkprisma 40 auf, welches die Richtung des Messlichtes um 180° umkehrt, so dass das Messlicht vor seiner Detektion erneut das Filter durchläuft. Anstatt des Umlenkprismas 40 können aber auch andere Umlenkmittel, beispielsweise zwei jeweils unter 45° zum Strahlengang geneigte Spiegel angeordnet sein. Zur Begrenzung des detektierten Wellenlängenbereiches kann vor jedem fotoelektrischen Detektor 19 noch ein schmalbandiges, auf die jeweilige Grundfarbe B, G, R abgestimmtes Bandpassfilter 41 angeordnet sein. Die Bandpassfilter 41 können als separate Elemente oder auch integral mit den fotoelektrischen Detektoren 19 ausgebildet sein. Gemäss einer bevorzugten Ausführungsvariante sind die elektrooptischen Filter 30, die Festkörperkristallplättchen 39, die Detektoren 19 allenfalls mit den Bandpassfiltern 41, und gegebenenfalls die Umlenkmittel 40 zu einem einzigen monolithischen Block zusammengefügt, vorzugsweise mit optischem Kitt zusammengeklebt (Fig. 5).

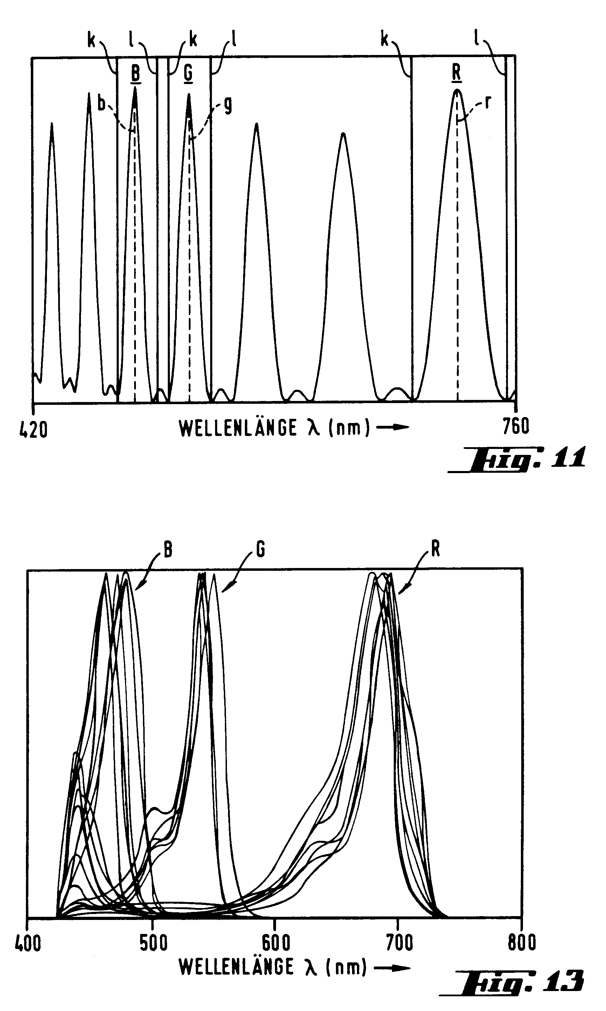

In den Fig. 6 bis 8 sind Varianten der sogenannten Solc-Filter dargestellt. In den Ausführungsbeispielen gemäss den Fig. 6 und 7 erfolgt die Beeinflussung des Doppelbrechungseffektes der elektrooptischen Kristallen 37 bzw. 38 durch ein longitudinales elektrisches Feld, während in Fig. 8 ein Solc-Filter dargestellt ist, dessen spektrales Transmissions- oder Absorptionsverhalten durch ein transversales elektrisches Feld, dessen Feldlinien senkrecht zu den Strahlengängen 20, 21, 22 der Grundfarben B, G, R verlaufen, steuerbar ist. Die Durchlassrichtungen p der Eingangs- und Ausgangspolarisatoren 31 und 32 sind vorzugsweise senkrecht zueinander ausgerichtet. (Fig. 9) Die elektrooptischen Kristalle 37 bzw. 38 sind derart angeordnet, dass die durch ihre optischen Achsen 331 und den jeweiligen Strahlengängen 20, 21, 22 definierten Ebenen mit den Durchlassrichtungen p der Eingangspolarisatoren 31 einen Winkel $\alpha$ von vorzugsweise etwa $\pm \frac{180°}{4n}$ bilden. n steht dabei für die Anzahl der Stufen des Solc-Filters. Vorzugsweise werden die elektrooptische Filter 30 des longitudinalen Solc-Typs zweistufig ausgebildet, wie den Fig. 6 und 7 zu entnehmen ist. Dabei beträgt der Winkel $\alpha$ vorzugsweise $\pm 22,5°$. Dazu werden im Anschluss an die Lichtaustrittsflächen 35 der Flüssigkristallzellen 370 Umlenkprismen 40 oder andere Umlenkmittel angeordnet, welche das Messlicht um 180° umlenken, so dass es das Filter erneut passiert. Bildeten die oben definierten, die optischen Achsen 331 der flüssigkristalle 37 enthaltenden Ebenen mit der Polarisationsrichtung des einfallenden Messlichtes vorzugsweise einen Winkel $\alpha$ von etwa +22,5°, so beträgt der entsprechende Winkel für das umgelenkte Messlicht, das das Filter in umgekehrter Richtung passiert, etwa -22,5°. Die Eingangs- und Ausgangspolarisatoren 31 und 32, sowie die fotoelektrischen Detektoren 19 sind bei diesen beiden Ausführungsvarianten auf derselben Seite der doppelbrechenden Kristalle 33 angeordnet. Wiederum können zur Begrenzung der detektierten Spektren vor den fotoelektrischen Detektoren 19 schmalbandige und auf die jeweilige Grundfarbe B, G, R abgestimmte Bandpassfilter 41 angeordnet sein.

Vorzugsweise werden, wie in Fig. 7 dargestellt, die Flüssigkristallzelle(n) 370, die Polarisatoren 31, 32, gegebenenfalls die Umlenkprismen 40 und die Detektoren 19 mit allfälligen Bandpassfiltern 41 zu einem einzigen monolithischen Block zusammengefügt, vorzugsweise mit optischen Kitt zusammengeklebt.

Bei dem in Fig. 8 dargestellten transversalen Solc-Filter ist ein elektrooptischer Festkörperkristall 38 zwischen dem Eingangs- und dem Ausgangspolarisator 31, 32 angeordnet. Aus Gründen der Anschaulichkeit wurde nur ein einziges Filter für eine der Grundfarben, hier für die Grundfarbe Blau B, dargestellt. Der elektrooptische Festkörperkristall 38 erstreckt sich in Richtung des Strahlenganges 20 und ist an seinen Längsseiten mit einer Anzahl gegenüberliegenden Elektroden 36 ausgestattet. Ueber diese Elektroden 36 kann in den einzelnen Längsabschnitten des elektrooptischen Festkörperkristalls 38 jeweils ein anderes elektrisches Feld erzeugt werden, was in einer anderen Orientierung seiner optischen Achsen 331 gegenüber der Durchlassrichtung p des Eingangspolarisators 31 resultiert. Vorzugsweise werden die elektrischen Felder so gewählt, dass die optischen Achsen 331 in den einzelnen Längsabschnitten alternierend um etwa $\pm \frac{180°}{4n}$ gegenüber der Durchlassrichtung p des Eingangspolarisators geneigt sind. Die Längsabschnitte des elektrooptischen Festköperkristalls 38 stellen die einzelnen Stufen des transversalen Solc-Filters dar. Im vorliegenden Ausführungsbeispiel ist das Filter 11 stufig ausgebildet. Wie in Fig. 8 weiter dargestellt, kann beispielsweise vor dem fotoelektrischen Detektor 19 noch ein schmalbandiges Bandpassfilter 41 angeordnet sein, das zur Begrenzung des detektierten Spektrums dient.

Die in den Fig. 4-7 dargestellten Ausführungsvarianten der elektrooptischen Filter 30 wurden anhand von Flüssigkristallen 37 beschrieben, die in etwa quaderförmigen Zellen 370 angeordnet sind. Natürlich könnten anstatt der Flüssigkristallzellen 370 auch elektrooptische Festkörperkristalle 38 gemäss den beschriebenen Varianten angeordnet sein. Zur Beeinflussung der Doppelbrechungseigenschaften derselben müssen allerdings, wie bereits eingangs erwähnt, elektrische Steuerspannungen in der Grössenordnung von Kilovolt angewendet werden.

In Fig. 9 ist das Prinzip eines mehrstufigen Solc-Filters mit alternierenden positiven und negativen Neigungswinkeln $\alpha$ der optischen Achsen 331 der elektrooptischen Kristalle 37 bzw. 38 dargestellt. Die Dicke t der einzelnen Filterstufen ist konstant. Die senkrecht zueinander ausgerichteten Durchgangsrichtungen p des Eingangs- und des Ausgangspolarisators 31 und 32 sowie die Projektion der optischen Achsen 331 der elektrooptischen Kristalle 37 bzw. 38 sind jweils durch Pfeile angedeutet.

Fig. 10 zeigt das Prinzip eines einstufigen Lyot-Ohman Filters. Die parallel zueinander ausgerichteten Durchlassrichtungen p des Eingangs- und des Ausgangspolarisators 31 und 32 und die Projektionen der optischen Achsen 331 des elektrooptischen Kristalls 37 bzw. 38 sind gleichfalls durch Pfeile angedeutet.

Die Wirkungsweise beider Filtertypen beruht auf dem Doppelbrechungseffekt der elektrooptischen Kristalle 37, 38 als Folge der Richtungsabhängigkeit oder Anisotropie der optischen Eigenschaften in bezug auf die Kristallorientierung. Das Messlicht jeder Grundfarbe B, G, R wird in doppelbrechenden Kristall in zwei Komponenten mit unterschiedlicher Ausbreitungsrichtung aufgespalten, in eine ordentliche Komponente, die dem Snelliusschen Brechungsgesetz gehorcht, und in eine ein davon abweichendes Verhalten zeigende ausserordentliche Komponente. Die beiden Komponenten sind linear polarisiert, wobei ihre Schwingungsrichtungen senkrecht aufeinander stehen. Infolge der Richtungsabhängigkeit (Anisotropie) der Eigenschaften und insbesondere der Brechzahl für die ordentliche und die ausserordentliche Komponente breiten sich diese mit unterschiedlichen Geschwindigkeiten aus. Infolge der unterschiedlichen Ausbreitungsgeschwindigkeiten ergibt sich für die beiden Komponenten an der Lichtaustrittsfläche 35 des doppelbrechenden Kristalls 37, 38 ein Gangunterschied. Dieser ist von der Dicke t des Kristalls 37, 38 von der Wellenlänge und von der Doppelbrechung abhängig. Die Doppelbrechung, die als Differenz der Brechzahlen für die ordentliche und die ausserordentliche Komponente definiert ist, kann durch ein elektrisches Feld (oder ein Magnetfeld) beeinflusst werden. Die Abhängigkeit der Doppelbrechung von einem elektrischen Feld ist beispielsweise in der Publikation von W.C. Gunning in Optical Engineering, November/December 1981, Vol. 20 No. 6, Seiten 837-845 diskutiert.

Das durch den Eingangspolarisator 31 linear polarisierte Messlicht wird in dem doppelbrechenden Kristall 37, 38 in zwei senkrecht zueinander polarisierte Komponenten aufgespalten, deren Gangunterschied während des Durchlaufens des Kristalls steuerbar ist. Mit dem Ausgangspolarisator 32 werden die beiden Komponenten wieder auf eine gemeinsame Schwingungsebene gebracht, sodass sie interferieren können. Je nach dem Gangunterschied erfolgt eine mehr oder weniger vollständige Auslöschung oder Verstärkung der spektralen Transmissionen.

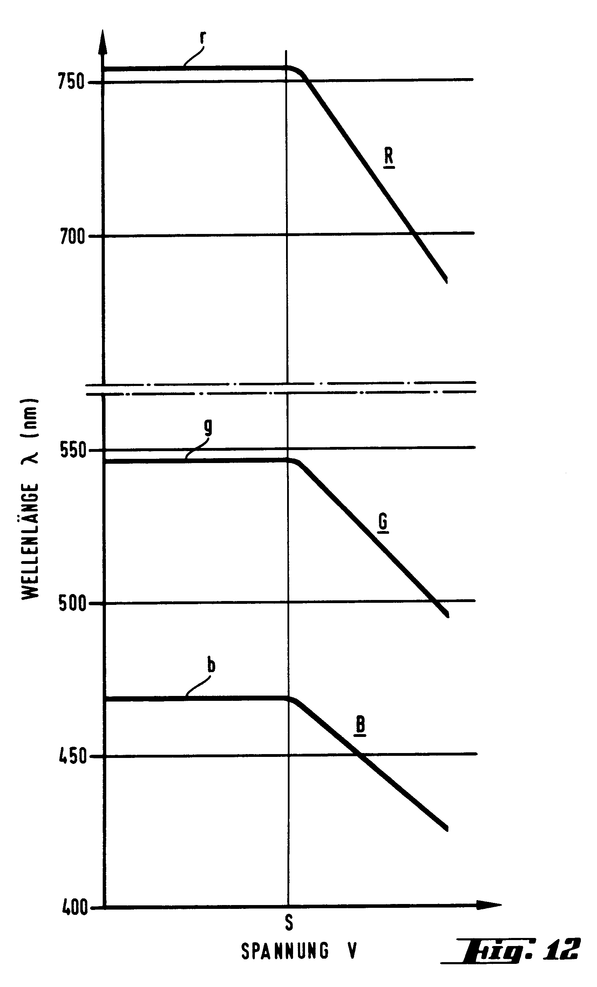

In Fig. 11 ist ein spektraler Transmissionsverlauf am Beispiel eines zwei-stufigen Solc-Filters dargestellt. Die spektralen Transmissionsverläufe für elektrooptische Filter 30 vom Lyot-Ohman Typ sehen qualitativ gleich aus. Insbesondere sind in dem dargestellten Diagramm die Transmissionsverläufe für die einzelnen Grundfarben zusammengefasst. Die vertikalen Linien k und l stehen jeweils für die kurzwellige k und die langwellige l Absorptionskante der wahlweise eingesetzten Bandpässe 41 zur Begrenzung des detektieren Wellenlängenbereichs. Die Transmissionsmaxima für die einzelnen Grundfarben Blau B, Grün G bzw. Rot R sind entsprechend mit b, g, und r bezeichnet.

Fig. 12 zeigt die spannungsabhängige Verschiebung der Transmissionsmaxima b, g und r. Die angelegte Steuerspannung V wird erst ab einer Schwellenspannung S wirksam. Von dieser Schwellenspannung S an werden die Transmissionsmaxima b, g, r mit steigender Steuerspannung V annähernd linear in Richtung kürzerer Wellenlängen $\lambda$ verschoben. Bei der Verwendung der in den Fig. 4 bis 8 dargestellten Ausführungsbeispiele für die elektrooptischen Filter 30 mit Flüssigkristallzellen 370 bewirkt schon eine Steuerspannung von wenigen Volt eine ausreichend grosse Verschiebung der Transmissionsmaxima b, g, und r. Ueberdies können die elektrooptischen Filter für die jeweilige Grundfarbe B, G und R auch separat gesteuert werden. Auf diese Weise können die steuerbaren Messfilter 30 individuell an die unterschiedlichen spektralen Empfindlichkeiten verschiedener Kopiermaterialien P angepasst werden, welche, wie aus Fig. 13 ersichtlich, über einen relativ grossen Wellenlängenbereich streuen können.

Mit dem erfindungsgemässen fotografischen Farbkopiergerät und dem erfindungsgemässen Belichtungssteuerungsverfahren wird den Erfordernissen und den unterschiedlichen spektralen Empfindlichkeiten verschiedener verwendeter Kopiermaterialien P auf einfache und optimale Weise Rechnung getragen. Die Bewertung der Kopiervorlage N kann immer schnell an die geänderten spektralen Empfindlichkeiten des Kopiermaterials angepasst werden, ohne die Messfilter 30 jedesmal tauschen zu müssen. Darüber hinaus ist es damit auch möglich, in einem zweiten Messschritt die Messfilter 30 nach Massgabe der spektralen Absorptionen der Farbstoffe der Kopiervorlage N zu steuern. Auf diese Weise können z.B. Farbstiche und/oder Farbdominanten der Kopiervorlage N ermittelt werden, aus denen korrigierte Kopierlichtmengen bestimmt werden. Die Bestimmung der in Abhängigkeit von den detektierten Farbstichen und/oder Farbdominanten korrigierten Kopierlichtmengen erfolgt dabei analog zu den in der EP-A-312,499 beschriebenen Verfahren. Auf diese Weise werden auch unter ungünstigen Voraussetzungen, bedingt durch starke Schwankungen der Eigenschaften der Kopiervorlagen, wie z.B. unterschiedliche Fabrikate, ungeeignete Beleuchtung, Unter- und Ueberbelichtungen usw., akzeptable Qualitäten der Kopien erreicht. Ausserdem ist die erfindungsgemässe Lösung kostengünstig und relativ einfach und erlaubt eine hohe Flexibilität bezüglich der eingesetzten Kopiervorlage N und Kopiermaterialien P.

## Patentansprüche

1.  Fotografisches Farbkopiergerät mit einer Projektionsanordnung (1, 2, 3), um eine Kopiervorlage (N) auf lichtempfindliches Kopiermaterial (P) abzubilden, mit einer Messfilter (30) und fotoelektrische Detektoren (19) umfassenden Messanordnung (4), um die Kopiervorlage (N) fotoelektrisch in einer Vielzahl von Abtastbereichen (A) jeweils in den drei Grundfarben (Blau B, Grün G und Rot R) zu analysieren und dabei den spektralen Empfindlichkeitsverläufen des Kopiermaterials (P) angepasste Farbauszugswerte zu bestimmen, und mit einer Belichtungssteuerungsanordnung, welche die Farbauszugswerte zur Festlegung der das Kopiermaterial (P) beaufschlagenden Kopierlichtmengen weiterverarbeitet und mit der Messanordnung (4) und der Projektionsanordnung (1, 2, 3) zusammenwirkt, dadurch gekennzeichnet, dass die Messfilter (30) bezüglich ihres spektralen Transmissions- oder Absorptionsverhaltens nach Maßgabe der spektralen Empfindlichkeiten des Kopiermaterials (P) individuell steuerbar ausgebildet sind.

2. Kopiergerät nach Anspruch 1, dadurch gekennzeichnet, dass die Messfilter (30) elektrooptische Filter sind, deren spektrales Transmissionsverhalten durch Anlegen eines elektrischen Feldes veränderbar ist.

3. Kopiergerät nach Anspruch 2, dadurch gekennzeichnet, dass die elektrooptischen Filter (30) Polarisationsfilter, insbesondere jeweils einen Eingangs- (31) und einen Ausgangspolarisator (32), und elektrooptische Kristalle (37, 38) umfassen.

4. Kopiergerät nach Anspruch 3, dadurch gekennzeichnet, dass die elektrooptischen Kristalle Flüssigkristalle (37) sind, die innerhalb einer etwa quaderförmigen und zumindest an ihren etwa planparallelen Lichteintritts- (34) und Lichtaustrittsflächen (35) transparenten Zelle (370) angeordnet sind.

5. Kopiergerät nach Anspruch 4, dadurch gekennzeichnet, dass die Flüssigkristalle (37) vom nematischen Typ sind, deren Orientierungsstruktur vorzugsweise parallel ist.

6. Kopiergerät nach Anspruch 3, dadurch gekennzeichnet, dass die elektrooptischen Kristalle Festkörperkristalle (38) mit etwa planparallelen Lichteintritts- (34) und Lichtaustrittsflächen (35) sind.

7. Kopiergerät nach Anspruch 6, dadurch gekennzeichnet, dass die Festkörperkristalle (38) vom Typ der Adenosindihydrogenphosphate (ADP) oder der Kaliumdihydrogenphosphate (KDP) sind.

8. Kopiergerät nach einem der Ansprüche 4 bis 7, dadurch gekennzeichnet, dass die Lichteintritts- (34) und die Lichtaustrittsflächen (35) im wesentlichen senkrecht zum Strahlengang (20, 21, 22) der Grundfarben (B, G, R) angeordnet sind.

9. Kopiergerät nach einem der Ansprüche 4 bis 8, dadurch gekennzeichnet, dass die den einzelnen Grundfarben (B, G, R) zugeordneten Flüssigkristallzellen (370) bzw. Festkörperkristalle (38) unterschiedliche Dicken (t) aufweisen.

10. Kopiergerät nach einem der Ansprüche 4 bis 8, dadurch gekennzeichnet, dass eine einzige Flüssigkristallzelle (370) bzw. ein einziger Festkörperkristall (38) von konstanter Dicke t derart angeordnet ist, dass sie (er) die Strahlengänge (20, 21, 22) jeder Grundfarbe (B, G, R) kreuzt.

11. Kopiergerät nach einem der Ansprüche 4 bis 10, dadurch gekennzeichnet, dass ein doppelbrechendes Festkörperkristallplättchen (39) im Strahlengang (20, 21, 22) jeder Grundfarbe vor der Lichteintrittsfläche (34) angeordnet ist.

12. Kopiergerät nach Anspruch 11, dadurch gekennzeichnet, dass die den einzelnen Grundfarben zugeordneten Festkörperkristallplättchen (39) unterschiedliche Dicken (d) aufweisen.

13. Kopiergerät nach Anspruch 11 oder 12, dadurch gekennzeichnet, dass die Festkörperkristallplättchen (39) aus Quarz, Saphir oder ähnlichen doppelbrechenden Materialien sind.

14. Kopiergerät nach einem der Ansprüche 11 bis 13, dadurch gekennzeichnet, dass die Festkörperkristallplättchen (39) derart ausgerichtet sind, dass ihre optischen Achsen (391) in der gleichen Ebene wie die entsprechenden Achsen (331) der elektrooptischen Kristalle (37, 38) liegen.

15. Kopiergerät nach einem der Ansprüche 3 bis 14, dadurch gekennzeichnet, dass die elektrooptischen Filter (30) nach Art der sogenannten Solc-Filter aufgebaut sind, wobei die Durchlassrichtungen (p) der Eingangs- und der Ausgangspolarisatoren (31, 32) vorzugsweise senkrecht zueinander ausgerichtet sind, und die durch die optischen Achsen (331) der elektrooptischen Kristalle (37, 38) und die Strahlengänge (20, 21, 22) gebildeten Ebenen mit den Durchlassrichtungen (p) der Eingangspolarisatoren (31) einen Win-

kel ($\alpha$) von etwa $\pm\dfrac{180°}{4n}$ einschliessen, wobei n für die Anzahl der Stufen des Solc-Filters steht.

16. Kopiergerät nach Anspruch 15, dadurch gekennzeichnet, dass das Solc-Filter zweistufig ausgebildet ist, wobei der Winkel $\alpha$ vorzugsweise $\pm22,5°$ beträgt.

17. Kopiergerät nach einem der Ansprüche 3 bis 14, dadurch gekennzeichnet, dass die elektrooptischen Filter (30) nach Art der sogenannten Lyot-Ohman Filter aufgebaut sind, wobei die Durchlassrichtungen (p) der Eingangs- und der Ausgangspolarisatoren (31, 32) parallel zueinander ausgerichtet sind, und die durch die optischen Achsen (331) der elektrooptischen Kristalle (37, 38) und die Strahlengänge (20, 21, 22) gebildeten Ebenen mit den Durchlassrichtungen (p) der Eingangspolarisatoren (31) einen Winkel ($\alpha$) von etwa $\pm20°$ bis $\pm50°$, vorzugsweise etwa $\pm45°$ einschliessen.

18. Kopiergerät nach einem der Ansprüche 2 bis 17, dadurch gekennzeichnet, dass Lichtumlenkmittel (40), vorzugsweise Umlenkprismen im Strahlengang (20, 21, 22) der Grundfarben (B, G, R) hinter den elektrooptischen Filtern (30) angeordnet sind, welche das Messlicht jeder Grundfarbe um etwa 180° umlenken, sodass es vor dem Auftreffen auf die fotoelektrischen Detektoren (19) das elektrooptische Messfilter (30) erneut passiert.

19. Kopiergerät nach einem der Ansprüche 2 bis 18, dadurch gekennzeichnet, dass das elektrische Feld etwa senkrecht zu den Strahlengängen (20, 21, 22) der Grundfarben (B, G, R) steht.

20. Kopiergerät nach einem der Ansprüche 4 bis 18, dadurch gekennzeichnet, dass das elektrische Feld etwa parallel zu den Strahlengängen (20, 21, 22) der Grundfarben (B, G, R) verläuft, wobei an den Lichteintritts- bzw. Lichtaustrittsflächen (34, 35) transparente Elektroden (36) angeordnet sind.

21. Kopiergerät nach Anspruch 20, dadurch gekennzeichnet, dass die Elektroden (36) aus Indium-Zinn-Oxyd oder einer ähnlichen Verbindung sind.

22. Kopiergerät nach einem der Ansprüche 18 bis 21, dadurch gekennzeichnet, dass die elektrooptischen Filter 30 mit allen ihren Einzelbestandteilen und gegebenenfalls den Festkörperkristallplättchen (39) und den Umlenkmitteln (40) zusammen mit den fotoelektrischen Detektoren (19) zu einem einzigen monolithischen Block zusammengefügt sind.

23. Kopiergerät nach Anspruch 23, dadurch gekennzeichnet, dass die elektrooptische Filter 30 mit allen ihren Einzelbestandteilen und gegebenenfalls den Festkörperkristallplättchen (39) und den Umlenkmitteln (40) zusammen mit den fotoelektrischen Detektoren (19) mit optischem Kitt zusammengeklebt sind.

24. Verfahren zur Steuerung der Belichtung in einem fotografischen Farbkopiergerät, wobei eine Kopiervorlage (N) fotoelektrisch mit einer Messanordnung (4) in einer Vierzahl von Abtastbereichen (A) analysiert wird, für jeden Abtastbereich (A) den Farbdurchlässigkeiten oder Farbdichten der Kopiervorlage (N) in den drei Grundfarben (Blau B, Grün G und Rot R) entsprechende Farbauszugswerte bestimmt und aus diesen unter Berücksichtigung gegebener Kriterien die erforderlichen Kopierlichtmengen zur Erstellung von Kopien auf lichtempfindliches Kopiermaterial (P) ermittelt werden, dadurch gekennzeichnet, dass das von jedem Abtastbereich (A) kommende Messlicht der drei Grundfarben (B, G, R) auf Messfilter (30) mit veränderbarem spektralen Transmissions- oder Absorptionsverhalten eingestrahlt wird, dass das spektrale Transmissions- oder Absorptionsverhalten der Messfilter (30) nach Massgabe der spektralen Empfindlichkeiten des Kopiermaterials (P) gesteuert wird, und dass das Messlicht (20, 21, 22) nach Passieren der steuerbaren Messfilter (30) detektiert wird.

25. Verfahren nach Anspruch 24, dadurch gekennzeichnet, dass als steuerbare Messfilter 30 elektrooptische Filter verwendet werden und dass die Steuerung des spektralen Transmissions- oder Absorptionsverhaltens der elektrooptischen Filter (30) durch Beeinflussung des Effektes der Doppelbrechung von elektrooptischen Kristallen (37, 38) in einem elektrischen Feld erfolgt, welches mit mindestens einer Spannungsquelle (33) erzeugt wird.

26. Verfahren nach Anpruch 25, dadurch gekennzeichnet, dass das elektrische Feld in longitudinaler Richtung, etwa parallel zum Strahlengang (20, 21, 22) der jeweiligen Grundfarbe (B, G, R) oder transversal, senkrecht zum Strahlengang (20, 21, 22) angelegt wird.

27. Verfahren nach Anspruch 25 oder 26, dadurch gekennzeichnet, dass als elektrooptische Kristalle Flüssigkristalle (37) verwendet werden, die vorzugsweise vom nematischen Typ sind und deren Orientierungsstruktur vorzugsweise parallel ist, und die von einer etwa quaderförmigen transparenten Zelle (370) eingeschlossen werden, an deren etwa senkrecht zum Strahlengang (20, 21, 22) des Messlichtes stehenden Lichteintritts- bzw. Lichtaustrittsflächen (34, 35) transparente Elektroden (36) angeordnet sind, zwischen denen ein longitudinales elektrisches Feld etwa parallel zum Strahlengang (20, 21, 22) aufgebaut wird.

28. Verfahren nach Anspruch 25 oder 26, dadurch gekennzeichnet, dass als elektrooptische Kristalle Festkörperkristalle (38) verwendet werden, die vorzugsweise vom Typ der Adenosindihydrogenphosphate (ADP) oder der Kaliumdihydrogenphosphate (KDP) sind und an deren etwa senkrecht zum Strahlengang (20, 21, 22) des Messlichtes stehenden Lichteintritts- bzw. Lichtaustrittsflächen (34, 35) transparente Elektroden (36) angeordnet sind, zwischen denen ein longitudinales elektrisches Feld etwa parallel zum Strahlengang (20, 21, 22) aufgebaut wird.

29. Verfahren nach Anspruch 27 oder 28, dadurch gekennzeichnet, dass das Messlicht jeder Grundfarbe (B, G, R) zuerst einen Eingangspolarisator (31) passiert, danach in die Flüssigkristallzelle (370) oder den Festkörperkristall (38) geleitet wird und schliesslich nach Passieren eines Ausgangspolarisators (32) dem zugeordneten fotoelektrischen Detektor (19) zugeführt wird.

30. Verfahren nach Anspruch 29, dadurch gekennzeichnet, dass das Messlicht auf elektrooptische Filter (30) vom Typ der Lyot-Ohman Filter geleitet wird, wobei die Eingangs- (31) und Ausgangspolarisatoren (32) bezüglich ihrer Lichtdurchlassrichtungen (p) parallel ausgerichtet und parallel zu den Lichteintrittsflächen (34) der Flüssigkristallzellen (370) bzw. der Festkörperkristalle (38) angeordnet werden, so dass sie mit den durch deren optischen Achse (331) und die Lichtausbreitungsrichtung (20, 21, 22) gebildeten Ebenen einen Winkel ($\alpha$) von etwa $\pm20°$ bis etwa $\pm50°$, vorzugsweise etwa $\pm45°$ einschliessen.

31. Verfahren nach einem der Ansprüche 27 bis 29, dadurch gekennzeichnet, dass das Messlicht (20, 21, 22) jeder Grundfarbe (B, G, R) auf elektrooptische Filter (30) vom Typ eines Solc-Filters geleitet wird, wobei die Eingangs- und die Ausgangspolarisatoren (31, 32) mit ihren Durchlassrichtungen (p) senkrecht zueinander augerichtet und parallel zu der Lichteintrittsflächen (34) der Flüssigkristallzellen (370) bzw. der Festkörperkristalle (38) angeordnet werden, und dass die Flüssigkristallzellen (370) bzw. die Festköperkristalle (38) derart ausgerichtet werden, dass die durch ihre optischen Achsen (331) und die Lichtausbreitungsrichtung (20, 21, 22) definierten Ebenen mit den Durchlassrichtungen (p) vorzugsweise alternierend einen Winkel von etwa $\pm\dfrac{180°}{4n}$ einschliessen, wobei n für die Anzahl der Stufen des Solc-Filters steht.

32. Verfahren nach einem der Ansprüche 29 bis 31, dadurch gekennzeichnet, dass das Messlicht jeder Grundfarbe (B, G, R) nach Passieren des elektrooptischen Filters (30) mit Mitteln (40), vorzugsweise einem Umlenkprisma um etwa 180° umgelenkt wird, sodass es das elektrooptische Filter (30) in umgekehrter Richtung erneut durchläuft.

33. Verfahren nach einem der Ansprüche 29 bis 32, dadurch gekennzeichnet, dass zwischen den Eingangspolarisatoren (31) und den Flüssigkristallzellen (370) bzw. Festkörperkristallen (38) Festkörperkristallplättchen (39) unterschiedlicher Dicke (d) angeordnet werden.

34. Verfahren nach einem der Ansprüche 29 bis 33, dadurch gekennzeichnet, dass die Polarisatoren (31, 32), die elektrooptischen Kristalle (37, 38) und gegebenenfalls die Festkörperkristallplättchen (39) und die Umlenkmittel (40) mit den Detektoren (19) zu einem monolithischen Block zusammengefügt, vorzugsweise mit optischem Kitt zusammengeklebt werden.

35. Verfahren nach einem der Ansprüche 24 bis 34, dadurch gekennzeichnet, dass das von jedem Abtastbereich kommende und in die Grundfarben (B, G, R) aufgespaltene Messlicht (20, 21, 22) bei zwei verschieden geregelten spektralen Transmissionen bzw. Absorptionen der elektrooptischen Filter (30) gemessen wird, wobei die eine nach Massgabe der spektralen Empfindlichkeiten des Kopiermaterials (P) und die andere nach Massgabe der spektralen Absorptionen der Farbstoffe der Kopiervorlage (N) zur Ermittlung von Farbstichen und/oder Farbdominanten der Kopiervorlage (N) gesteuert wird, und dass die ermittelten Kopierlichtmengen in Abhängigkeit von den detektierten Farbstichen und/oder Farbdominanten korrigiert werden.

## Claims

1. A photographic colour copying apparatus comprising a projection arrangement (1, 2, 3) for imaging a copy master (N) on photosensitive copy material (P), a measuring arrangement (4), which includes measuring filters (30) and photoelectric detectors (19), for photoelectrically analyzing the copy master (N) in the three basic colours (blue B, green G and red R) in a plurality of scanning regions (A) and thereby determining colour extract values adapted to the spectral sensitivity variations of the copy material (P), and an exposure control arrangement which further processes the colour extract values in order to determine the quantities of copying light acting upon the copy material (P) and which cooperates with the measuring arrangement (4) and the projection arrangement (1, 2, 3), wherein the measuring filters (30) are so constructed that they can be controlled individually with regard to their spectral transmission or absorption behaviour, according to the spectral sensitivities of the copy material (P).

2. A copying apparatus according to claim 1, wherein the measuring filters (30) are electro-optical filters having a spectral transmission behaviour that may be varied by application of an electric field.

3. A copying apparatus according to claim 2, wherein the electro-optical filters (30) comprise polarizing filters, especially an input polarizer (31) and an output polarizer (32) in each case, and electro-optical crystals (37, 38).

4. A copying apparatus according to claim 3, wherein the electro-optical crystals are liquid crystals (37) arranged inside an approximately parallelepiped cell (370) that is transparent at least at its approximately plane-parallel light inlet (34) and light outlet (35) surfaces.

5. A copying apparatus according to claim 4, wherein the liquid crystals (37) are of the nematic type having a preferably parallel orientation structure.

6. A copying apparatus according to claim 3, wherein the electro-optical crystals are solid crystals (38) with approximately plane-parallel light inlet (34) and light outlet (35) surfaces.

7. A copying apparatus according to claim 6, wherein the solid crystals (38) are of the adenosine dihydrogen phosphate (ADP) or potassium dihydrogen phosphate (KDP) type.

8. A copying apparatus according to any one of claims 4 to 7, wherein the light inlet (34) and light outlet (35) surfaces are arranged substantially perpendicular to the beam path (20, 21, 22) of the basic colours (B, G, R).

9. A copying apparatus according to any one of claims 4 to 8, wherein the liquid crystal cells (370) or solid crystals (38) assigned to the individual basic colours (B, G, R) have different thicknesses (t).

10. A copying apparatus according to any one of claims 4 to 8, wherein a single liquid crystal cell (370) or a single solid crystal (38) of constant thickness (t) is so arranged that it crosses the beam path (20, 21, 22) of each basic colour (B, G, R).

11. A copying apparatus according to any one of claims 4 to 10, wherein a birefringent solid crystal platelet (39) is arranged in front of the light inlet surface (34) in the beam path (20, 21, 22) of each basic colour.

12. A copying apparatus according to claim 11, wherein the solid crystal platelets (39) assigned to the individual basic colours have different thicknesses (d).

13. A copying apparatus according to claim 11 or claim 12, wherein the solid crystal platelets (39) consist of quartz, sapphire or a similar birefringent material.

14. A copying apparatus according to any one of claims 11 to 13, wherein the solid crystal platelets (39) are oriented in such a manner that their optical axes (391) are located in the same plane as the corresponding axes (331) of the electro-optical crystals (37, 38).

15. A copying apparatus according to any one of claims 3 to 14, wherein the electro-optical filters (30) are constructed in the manner of so-called Solc filters, wherein the transmission directions (p) of the input and output polarizers (31, 32) are oriented preferably perpendicular to each other, and the planes defined by the optical axes (331) of the electro-optical crystals (37, 38) and the beam paths (20, 21, 22) include with the transmission directions (p) of the input polarizers (31) an angle ($\alpha$) of about ±180°/4n, n being the number of stages of the Solc filter.

16. A copying apparatus according to claim 15, wherein the Solc filter is in two stages, and the angle $\alpha$ is preferably ±22.5°.

17. A copying apparatus according to any one of claims 3 to 14, wherein the electro-optical filters (30) are constructed in the manner of Lyot-Ohman filters, wherein the transmission directions (p) of the input and output polarizers (31, 32) are oriented parallel to each other, and the planes defined by the optical axes (331) of the electro-optical crystals (37, 38) and the beam paths (20, 21, 22) include with the transmission directions (p) of the input polarizers (31) an angle ($\alpha$) of about ±20° to ±50°, preferably about ±45°.

18. A copying apparatus according to any one of claims 2 to 17, wherein light deflecting means (40), preferably deviating prisms, are arranged in the beam path (20, 21, 22) of the basic colours (B, G, R) behind the electro-optical filters (30), which light deflecting means deflect the measuring light of each basic colour by about 180° so that it passes through the electro-optical measuring filters (30) again before it impinges on the photoelectric detectors (19).

19. A copying apparatus according to any one of claims 2 to 18, wherein the electric field is approximately perpendicular to the beam paths (20, 21, 22) of the basic colours (B, G, R).

20. A copying apparatus according to any one of claims 4 to 18, wherein the electric field is approximately parallel to the beam paths (20, 21, 22) of the basic colours (B, G, R), transparent electrodes (36) being arranged at the light inlet and outlet surfaces (34, 35).

21. A copying apparatus according to claim 20, wherein the electrodes (36) consist of indium tin oxide or a similar compound.

22. A copying apparatus according to any one of claims 18 to 21, wherein the electro-optical filters (30) with all their individual components and, where applicable, the solid crystal platelets (39) and the deflecting means (40) are joined together with the photoelectric detectors (19) to form a single monolithic block.

23. A copying apparatus according to claim 23, wherein the electro-optical filters (30) with all their individual components and, where applicable, the solid crystal platelets (39) and the deflecting means (40) are adhesively bonded together with the photoelectric detectors (19) by means of an optical cement.

24. A process for controlling the exposure in a photographic colour copying apparatus, comprising the steps of photoelectrically analyzing a copy master (N) in a plurality of scanning regions (A) with a measuring arrangement (4), determining for each scanning region (A) colour extract values corresponding to the colour transmissivities or colour densities of the copy master (N) in the three basic colours (blue B, green G, red R), and determining from the colour extract values, taking given criteria into consideration, the quantities of copying light required for the production of copies on photosensitive copy material (P), wherein the measuring light of the three basic colours (B, G, R) coming from each scanning region (A) is projected onto measuring filters (30) having a variable spectral transmission or absorption behaviour, the spectral transmission or absorption behaviour of the measuring filters (30) is controlled in accordance with the spectral sensitivities of the copy material (P) and the measuring light (20, 21, 22) is detected following its passage through the controllable measuring filters (30).

25. A process according to claim 24, wherein electro-optical filters are used as the controllable measuring filters (30) and wherein the spectral transmission or absorption behaviour of the electro-optical filters (30) is controlled by influencing the birefringent effect of electro-optical crystals (37, 38) in an electric field which is produced by at least one power source (33).

26. A process according to claim 25, wherein the electric field is applied in the longitudinal direction, approximately parallel to the beam path (20, 21, 22) of the basic colour (B, G, R) involved, or in the transverse direction, perpendicularly to the beam path (20, 21, 22).

27. A process according to claim 25 or claim 26, wherein liquid crystals (37) are used as the electro-optical crystals, which liquid crystals are preferably of the nematic type and have a preferably parallel orientation structure, are enclosed in an approximately parallelepiped transparent cell (370) and have transparent electrodes (36) located at their light inlet and outlet surfaces (34, 35) standing approximately perpendicular to the beam path (20, 21, 22) of the measuring light, between which electrodes a longitudinal electric field is generated approximately parallel to the beam path (20, 21, 22).

28. A process according to claim 25 or claim 26, wherein solid crystals (38) are used as the electro-optical crystals, which solid crystals are preferably of the adenosine dihydrogen phosphate (ADP) or potassium dihydrogen phosphate (KDP) type and have transparent electrodes (36) arranged at their light inlet and outlet surfaces (34, 35) standing approximately perpendicular to the beam path (20, 21, 22) of the measuring light, between which electrodes a longitudinal electric field is generated approximately parallel to the beam path (20, 21, 22).

29. A process according to claim 27 or claim 28, wherein the measuring light of each basic colour (B, G, R) first passes through an input polarizer (31), then is passed into the liquid crystal cell (370) or the solid crystal (38) and finally, after passing through an outlet polarizer (32), is passed to an associated photoelectric detector (19).

30. A process according to claim 29, wherein the measuring light is passed onto electro-optical filters (30) of the Lyot-Ohman filter type, wherein the input polarizer (31) and the output polarizer (32) are oriented parallel with regard to their light transmission directions (p) and are arranged parallel to the light inlet surfaces (34) of the liquid crystal cells (370) or of the solid crystals (38), so that they include with the planes defined by their optical axes (331) and the light propagation direction (20, 21, 22) an angle ($\alpha$) of about $\pm 20°$ to about $\pm 50°$, preferably about $\pm 45°$.

31. A process according to any one of claims 27 to 29, wherein the measuring light (20, 21, 22) of each basic colour (B, G, R) is passed onto electro-optical filters (30) of the Solc filter type, wherein the inlet and outlet polarizers (31, 32) are oriented with their transmission directions (p) perpendicular to each other and are arranged parallel to the light inlet surfaces (34) of the liquid crystal cells (370) or of the solid crystals (38), and wherein the liquid crystal cells (370) or the solid crystals (38) are oriented in such a manner that the planes defined by their optical axes (331) and the light propagation direction (20, 21, 22) include with the transmission directions (p), preferably alternatingly, an angle of about $\pm 180°/4n$, wherein n is the number of stages of the Solc filter.

32. A process according to any one of claims 29 to 31, wherein the measuring light of each basic colour (B, G, R) is deflected by about 180° after passing through the electro-optical filter (30) by means (40), preferably a deviating prism, so that it passes through the electro-optical filter (30) again in the reverse direction.

33. A process according to any one of claims 29 to 32, wherein solid crystal platelets (39) of different thicknesses (d) are arranged between the input polarizers (31) and the liquid crystal cells (370) or solid crystals (38).

34. A process according to any one of claims 29 to 33, wherein the polarizers (31, 32), the electro-optical crystals (37, 38) and, where applicable, the solid crystal platelets (39) and the deflecting means (40) are joined together with the detectors (19), preferably adhesively bonded together therewith by means of an optical cement, to form a monolithic block.

35. A process according to any one of claims 24 to 34, wherein the measuring light (20, 21, 22) coming from each scanning region and split into the basic colours (B, G, R) is measured at two differently regulated spectral transmissions and absorptions of the electro-optical filters (30), the one being controlled in accordance with the spectral sensitivities of the copy material (P) and the other in accordance with the spectral absorptions of the colouring agents of the copy master (N) in order to determine colour casts and/or colour dominants of the copy master (N), and wherein the quantities of copying light determined are corrected in dependence upon the colour casts and/or colour dominants detected.

## Revendications

1. Copieur photographique couleur, comprenant un dispositif de projection (1, 2, 3) pour reproduire un original à copier (N) sur un matériau de copie photosensible (P) ; un dispositif mesureur (4) englobant des filtres mesureurs (30) et des détecteurs photoélectriques (19) pour analyser photoélectriquement l'original à copier (N), dans les trois couleurs fondamentales respectives (bleu B, vert G et rouge R), en de multiples zones d'exploration (A), et pour déterminer ainsi des valeurs d'extraits de couleurs adaptées aux allures de sensibilité spectrales du matériau de copie (P) ; et un dispositif de commande d'illumination qui transforme les valeurs d'extraits de couleurs en vue d'établir les quantités de lumière de copiage agissant sur le matériau de copie (P), et qui coopère avec le dispositif mesureur (4) et avec le dispositif de projection (1, 2, 3), caractérisé par le fait que les filtres mesureurs (30) sont conçus de telle sorte que leur comportement spectral de transmission ou d'absorption puisse être commandé individuellement en fonction des sensibilités spectrales du matériau de copie (P).

2. Copieur selon la revendication 1, caractérisé par le fait que les filtres mesureurs (30) sont des filtres électro-optiques, dont le comportement spectral de transmission peut être modifié par application d'un champ électrique.

3. Copieur selon la revendication 2, caractérisé par le fait que les filtres électro-optiques (30) sont des filtres de polarisation et comprennent notamment, à chaque fois, un polariseur d'entrée (31) et un polariseur de sortie (32), ainsi que des cristaux électro-optiques (37, 38).

4. Copieur selon la revendication 3, caractérisé par le fait que les cristaux électro-optiques sont des cristaux liquides (37) logés à l'intérieur d'une cellule (370) sensiblement parallélépipédique, qui est transparente sur au moins ses surfaces d'entrée (34) et de sortie (35) de lumière, sensiblement planes et parallèles.

5. Copieur selon la revendication 4, caractérisé par le fait que les cristaux liquides (37) sont du type nématique, dont la structure d'orientation est de préférence parallèle.

6. Copieur selon la revendication 3, caractérisé par le fait que les cristaux électro-optiques sont des cristaux solides (38) dont les surfaces d'entrée (34) et de sortie (35) de lumière sont sensiblement planes et parallèles.

7. Copieur selon la revendication 6, caractérisé par le fait que les cristaux solides (38) sont du type des dihydrogénophosphates d'adénosine (ADP) ou des dihydrogénophosphates de potassium (KDP).

8. Copieur selon l'une des revendications 4 à 7, caractérisé par le fait que les surfaces d'entrée (34) et de sortie (35) de lumière sont agencées, pour l'essentiel, perpendiculairement à la trajectoire de rayonnement (20, 21, 22) des couleurs fondamentales (B, G, R).

9. Copieur selon l'une des revendications 4 à 8, caractérisé par le fait que les cellules (370) à cristaux liquides ou les cristaux solides (38), respectivement associé(e)s aux couleurs fondamentales individuelles (B, G, R), présentent des épaisseurs différentes (t).

10. Copieur selon l'une des revendications 4 à 8, caractérisé par le fait qu'une unique cellule (370) à cristaux liquides ou un unique cristal solide (38) d'épaisseur constante t est respectivement agencé(e) de telle sorte qu'elle (il) croise les trajectoires de rayonnement (20, 21, 22) de chaque couleur fondamentale (B, G, R).

11. Copieur selon l'une des revendications 4 à 10, caractérisé par le fait qu'une plaquette biréfringente (39) à cristaux solides se trouve, sur la trajectoire de rayonnement (20, 21, 22) de chaque couleur fondamentale, avant la surface (34) d'entrée de lumière.

12. Copieur selon la revendication 11, caractérisé par le fait que les plaquettes (39) à cristaux solides, associées aux couleurs fondamentales individuelles, présentent des épaisseurs différentes (d).

13. Copieur selon la revendication 11 ou 12, caractérisé par le fait que les plaquettes (39) à cristaux solides consistent en du quartz, en du saphir ou en des matériaux similaires à double réfraction.

14. Copieur selon l'une des revendications 11 à 13, caractérisé par le fait que les plaquettes (39) à cristaux solides sont orientées de façon telle que leurs axes optiques (391) se trouvent dans le même plan que les axes correspondants (331) des cristaux électro-optiques (37, 38).

15. Copieur selon l'une des revendications 3 à 14, caractérisé par le fait que les filtres électro-optiques (30) sont structurellement organisés à la manière des "filtres de Solc", dans lesquels les sens passants (p) des polariseurs d'entrée et de sortie (31, 32) sont, de préférence, mutuellement perpendiculaires, et les plans formés par les axes optiques (331) des cristaux électro-optiques (37, 38) et par les trajectoires de rayonnement (20, 21, 22) décrivent, avec les sens passants (p) des polariseurs d'entrée (31), un angle ($\alpha$) d'environ $\pm \dfrac{180°}{4n}$, $\underline{n}$ désignant le nombre des étages du filtre de Solc.

16. Copieur selon la revendication 15, caractérisé par le fait que le filtre de Solc est de réalisation à deux étages, l'angle$\alpha$ mesurant de préférence $\pm 22,5°$.

17. Copieur selon l'une des revendications 3 à 14, caractérisé par le fait que les filtres électro-optiques (30) sont structurellement organisés à la manière des "filtres de Lyot-Ohman", dans lesquels les sens passants (p) des polariseurs d'entrée et de sortie (31, 32) sont mutuellement parallèles, et les plans formés par les axes optiques (331) des cristaux électro-optiques (37, 38) et par les trajectoires de rayonnement (20, 21, 22) décrivent, avec les sens passants (p) des polariseurs d'entrée (31), un angle ($\alpha$) compris entre environ $\pm 20°$ et $\pm 50°$ et mesurant, de préférence, environ $\pm 45°$.

18. Copieur selon l'une des revendications 2 à 17, caractérisé par le fait que des moyens (40) déflecteurs de lumière, de préférence des prismes déflecteurs disposés, sur la trajectoire de rayonnement (20, 21, 22) des couleurs fondamentales (B, G, R), derrière les filtres électro-optiques (30), dévient d'environ 180° la lumière mesurée de chaque couleur fondamentale, de telle sorte qu'elle franchisse une nouvelle fois le filtre mesureur électro-optique (30) avant de venir incider sur les détecteurs photoélectriques (19).

19. Copieur selon l'une des revendications 2 à 18, caractérisé par le fait que le champ électrique est à peu près perpendiculaire aux trajectoires de rayonnement (20, 21, 22) des couleurs fondamentales (B, G, R).

20. Copieur selon l'une des revendications 4 à 18, caractérisé par le fait que le champ électrique s'étend à peu près parallèlement aux trajectoires de rayonnement (20, 21, 22) des couleurs fondamentales (B, G, R), des électrodes transparentes (36) étant disposées sur les surfaces respectives (34, 35) d'entrée ou de sortie de lumière.

21. Copieur selon la revendication 20, caractérisé par le fait que les électrodes (36) consistent en de l'oxyde d'indium-étain, ou en un composé similaire.

22. Copieur selon l'une des revendications 18 à 21, caractérisé par le fait que les filtres électro-optiques (30) sont regroupes en un unique bloc monolithique avec tous leurs composants individuels et éventuellement avec les plaquettes (39) à cristaux solides et les moyens déflecteurs (40), conjointement aux détecteurs photoélectriques (19).

23. Copieur selon la revendication 22, caractérisé par le fait que les filtres électro-optiques (30) sont solidarisés par collage au moyen d'un ciment d'optique, avec tous leurs composants individuels et éventuellement avec les plaquettes (39) à cristaux solides et les moyens déflecteurs (40), conjointement aux détecteurs photoélectriques (19).

24. Procédé de commande de l'illumination dans un copieur photographique couleur, selon lequel un original à copier (N) est analysé photoélectriquement à l'aide d'un dispositif mesureur (4), dans de multiples zones d'exploration (A), des valeurs d'extraits de couleurs, correspondant aux perméabilités colorimétriques ou aux puretés colorimétriques de l'original à copier (N), sont déterminées pour chaque zone d'exploration (A), dans les trois couleurs fondamentales (bleu B, vert G et rouge R) et, sur la base de ces valeurs, les quantités nécessaires de lumière de copiage sont établies en tenant compte de critères donnés, pour réaliser des copies sur un matériau de copie photosensible (P), caractérisé par le fait que la lumière mesurée des trois couleurs fondamentales (B, G, R), provenant de chaque zone d'exploration (A), est diffusée sur des filtres mesureurs (30) dont le comportement spectral de transmission ou d'absorption est variable ; par le fait que le comportement spectral de transmission ou d'absorption des filtres mesureurs (30) est commandé en fonction des sensibilités spectrales du matériau de copie (P) ; et par le fait que la lumière mesurée (20, 21, 22) est détectée après franchissement des filtres mesureurs commandables (30).

25. Procédé selon la revendication 24, caractérisé par le fait que des filtres électro-optiques sont utilisés en tant que filtres mesureurs commandables (30) ; et par le fait que la commande du comportement spectral de transmission ou d'absorption des filtres électro-optiques (30) a lieu en influençant l'effet de double réfraction de cristaux électrooptiques (37, 38), dans un champ électrique engendré par au moins une source de tension (33).

26. Procédé selon la revendication 25, caractérisé par le fait que le champ électrique est appliqué dans la direction longitudinale, à peu près parallèlement à la trajectoire de rayonnement (20, 21, 22) de la couleur fondamentale considérée (B, G, R), ou bien transversalement, perpendiculairement à la trajectoire de rayonnement (20, 21, 22).

27. Procédé selon la revendication 25 ou 26, caractérisé par le fait que des cristaux liquides (37), utilisés en tant que cristaux électro-optiques, sont de préférence du type nématique, présentent une structure d'orientation préférentiellement parallèle, et sont emprisonnés par une cellule transparente (370) sensiblement parallélépipédique dont les surfaces respectives (34, 35) d'entrée ou de sortie de lumière, sensiblement perpendiculaires à la trajectoire de rayonnement (20, 21, 22) de la lumière mesurée, sont garnies d'électrodes transparentes (36) entre lesquelles un champ électrique longitudinal est engendré à peu près parallèlement à la trajectoire de rayonnement (20, 21, 22).

28. Procédé selon la revendication 25 ou 26, caractérisé par le fait que des cristaux solides (38), utilisés en tant que cristaux électro-optiques, sont de préférence du type des dihydrogénophosphates d'adénosine (ADP) ou des dihydrogénophosphates de potassium (KDP) et présentent sur leurs surfaces respectives (34, 35) d'entrée ou de sortie de lumière, sensiblement perpendiculaires à la trajectoire de rayonnement (20, 21, 22) de la lumière mesurée, des électrodes transparentes (36) entre lesquelles un champ électrique longitudinal est engendré à peu près parallèlement à la trajectoire de rayonnement (20, 21, 22).

29. Procédé selon la revendication 27 ou 28, caractérisé par le fait que la lumière mesurée de chaque couleur fondamentale (B, G, R) franchit tout d'abord un polariseur d'entrée (31), est ensuite dirigée dans la cellule (370) à cristaux liquides ou dans le cristal solide (38) et est pour finir, après avoir franchi un polariseur de sortie (32), amenée vers le détecteur photoélectrique associé (19).

30. Procédé selon la revendication 29, caractérisé par le fait que la lumière mesurée est dirigée sur des filtres électro-optiques (30) du type des filtres de Lyot-Ohman, dans lesquels les sens (p) de passage de lumière des polariseurs d'entrée (31) et de sortie (32) sont orientés parallèlement et sont agencés parallèlement aux surfaces respectives (34) d'entrée de lumière des cellules (370) à cristaux liquides ou des cristaux solides (38), de telle sorte qu'ils décrivent, avec les plans formés par l'axe optique (331) de ces derniers et par la direction (20, 21, 22) de propagation de la lumière, un angle ($\alpha$) compris entre environ $\pm 20°$ et environ $\pm 50°$ et mesurant, de préférence, environ $\pm 45°$.

31. Procédé selon l'une des revendications 27 à 29, caractérisé par le fait que la lumière mesurée (20, 21, 22) de chaque couleur fondamentale (B, G, R) est dirigée sur des filtres électro-optiques (30) du type d'un filtre de Solc, dans lequel les sens passants (p) des polariseurs d'entrée et de sortie (31, 32) sont orientés de façon mutuellement perpendiculaire, et sont agencés parallèlement aux surfaces respectives (34) d'entrée de lumière des cellules (370) à cristaux liquides ou des cristaux solides (38) ; et par le fait que les cellules (370) à cristaux liquides ou les cristaux solides (38) sont orienté(e)s de telle sorte que les plans définis par leurs axes optiques (331) et par la direction (20, 21, 22) de propagation de la lumière décrivent de préférence en alternance, avec les sens passants (p), un angle d'environ $\pm \dfrac{180°}{4n}$, $\underline{n}$ représentant le nombre des étages du filtre de Solc.

32. Procédé selon l'une des revendications 29 à 31, caractérisé par le fait que la lumière mesurée de chaque couleur fondamentale (B, G, R) est déviée d'environ 180° après franchissement du filtre électro-optique (30), par des moyens (40) constitués préférentiellement d'un prisme déflecteur, de telle sorte qu'elle traverse de nouveau le filtre électrooptique (30) en sens inverse.

33. Procédé selon l'une des revendications 29 à 32, caractérisé par le fait que des plaquettes (39) à cristaux solides, d'épaisseurs différentes (d), sont interposées entre les polariseurs d'entrée (31) et, respectivement, les cellules (370) à cristaux liquides ou les cristaux solides (38).

34. Procédé selon l'une des revendications 29 à 33, caractérisé par le fait que les polariseurs (31, 32), les cristaux électro-optiques (37, 38) et éventuellement les plaquettes (39) à cristaux solides et les moyens déflecteurs (40) sont regroupés, avec les détecteurs (19), en un bloc monolithique et sont, de préférence, solidarisés par collage au moyen d'un ciment d'optique.

35. Procédé selon l'une des revendications 24 à 34, caractérisé par le fait que la lumière mesurée (20, 21, 22), provenant de chaque zone d'exploration et scindée en les couleurs fondamentales (B, G, R), est mesurée en présence de deux transmissions ou absorptions spectrales différemment réglées des filtres électro-optiques (30), l'une étant commandée en fonction des sensibilités spectrales du matériau de copie (P), et l'autre étant commandée en fonction des absorptions spectrales des pigments de l'original à copier (N), afin d'établir des nuances et/ou des dominantes de couleur de l'original à copier (N) ; et par le fait que les quantités de lumière de copiage établies sont corrigées en fonction des nuances et/ou dominantes de couleur détectées.

*Fig. 1*

*Fig. 3*

Fig. 2

Fig. 5

Fig. 4

EP 0 420 817 B1

**Fig. 6**

**Fig. 7**

Fig. 8

Fig. 9

Fig. 10

k    l    k    l       k       l

**B**    **G**      **R**

b    g      r

420       WELLENLÄNGE $\lambda$ (nm) ⟶       760

*Fig. 11*

B      G        R

400      500      600      700      800

WELLENLÄNGE $\lambda$ (nm) ⟶

*Fig. 13*

Fig. 12